# NEUE EUROPÄISCHE PATENTSCHRIFT

(11) **EP 1 067 319 B2**
(45) Veröffentlichungstag und Bekanntmachung des Hinweises auf die Entscheidung über den Einspruch: **16.01.2008**
(45) Hinweis auf die Patenterteilung: 04.08.2004
(21) Anmeldenummer: 00109135.4
(22) Anmeldetag: 05.05.2000
(51) Int. Cl.: F16H 61/28

(54) **Einrichtung zum Steuern einer Stelleinrichtung für ein Getriebe**
Control device for a transmission actuator
Dispositif de commande pour actionneur de transmission

(30) Priorität: 09.07.1999 DE 19931973
(43) Veröffentlichungstag der Anmeldung: 10.01.2001
(73) Patentinhaber: WABCO GmbH, 30453 Hannover (DE)
(72) Erfinder: Klatt, Alfred, 29339 Wathlingen (DE)
(74) Vertreter: Wasiljeff, Johannes M.B.

(56) Entgegenhaltungen:
- EP-A- 0 723 097
- EP-A- 0 802 356
- EP-A2- 0 648 900
- EP-B1- 0 059 853
- DE-A- 3 315 221
- DE-A1- 4 309 901
- DE-A1- 19 543 876
- DE-A1- 19 637 001
- US-A- 5 836 207

## Beschreibung

Die Erfindung betrifft eine Einrichtung zum Steuern wenigstens einer Getriebe-Stelleinrichtung.

Eine derartige Einrichtung ist aus der DE 33 15 221 C2 bekannt. Weiterhin ist aus US-A 5836207 eine Getriebe-Stelleinrichtung bekannt mit Gang- und Gassenzylinder, bei der ein einziger Drucksensor zum Erfassen von Drücken von unterschiedlichen Druckkammern und der Druckmittelquelle verwendet wird.

Die bekannte Einrichtung weist eine erste steuerbare Ventileinrichtung und eine zweite steuerbare Ventileinrichtung auf, über welche eine erste Druckmittelkammer und eine zweite Druckmittelkammer einer Stelleinrichtung wahlweise mit einer Druckmittelquelle oder mit einer Druckmittelsenke verbindbar sind. Die Stelleinrichtung besitzt einen Kolben mit einer Kolbenstange, wobei der Kolben vom Druckmittel in den Druckmittelkammern in Richtung seiner Längsachse antreibbar ist. Die Kolbenstange ist über einen Hebel mit einer Schaltwelle eines Getriebes verbunden. Zusätzlich weist die Einrichtung eine druckmittelbetätigbare Festhalteeinrichtung für die Schaltwelle des Getriebes auf. Mittels einer steuerbaren Ventileinrichtung ist die Festhalteeinrichtung wahlweise mit der Druckmittelquelle oder mit der Druckmittelsenke verbindbar. Die steuerbaren Ventileinrichtungen sind mit einer elektrischen Steuereinrichtung elektrisch verbunden.

Zum Schalten des Getriebes wird zuerst die Festhalteeinrichtung durch Beaufschlagen mit Druckmittel in ihre Lösestellung gebracht. Dann wird durch Einsteuern von Druckmittel in die eine Druckmittelkammer der Stelleinrichtung der mit der Schaltwelle des Getriebes wirkverbundene Kolben der Stelleinrichtung angetrieben. Kurz bevor die Schaltwelle die gewünschte Position erreicht hat, wird die Festhalteeinrichtung entlüftet.Durch die Kraft einer Feder der Festhalteeinrichtung gelangt ein Teil der Festhalteeinrichtung in eine Position, in welcher die Festhalteeinrichtung die Schaltwelle abbremst. Gleichzeitig wird die Druckmittelzufuhr zur Druckmittelkammer der Stelleinrichtung unterbrochen. Wenn die Schaltwelle die gewünschte Position erreicht hat, wird sie von der Festhalteeinrichtung in dieser Position fixiert. Das Umschalten der Festhalteeinrichtung von der Lösestellung in die Brems- bzw. Haltestellung und das Unterbrechen der Druckmittelzufuhr zur Druckmittelkammer der Stelleinrichtung erfolgt in Abhängigkeit von der Position oder auch in Abhängigkeit von der Laufgeschwindigkeit der Schaltwelle des Getriebes.

Mit der steuerbaren Festhalteeinrichtung der bekannten Einrichtung wird unter anderem erreicht, daß bei einem Stellvorgang der Kolben nicht über die gewünschte Position hinausfährt (Überschwingen des Kolbens). Dieses Überschwingen des Kolbens wird unter anderem dadurch verursacht, daß der Druck in der Druckmittelkammer der Stelleinrichtung bei einem Stellvorgang relativ stark ansteigt, um eine Kraft auf den Kolben und somit auf die Schaltwelle ausüben zu können, die zum Lösen der Schaltwelle aus einer fixierten Stellung erforderlich ist. Der starke Druckanstieg bewirkt wiederum, daß der Kolben sich mit relativ hoher Geschwindigkeit in Richtung auf seine vorbestimmte Halteposition zubewegt.

Der Erfindung liegt die Aufgabe zugrunde, eine Einrichtung zum Steuern einer Getriebe-Stelleinrichtung zu schaffen, die sich mit einfachen Mitteln herstellen läßt.

Diese Aufgabe wird mit der im Patentanspruch 1 angegebenen Ausführung der Erfindung gelöst. Weiterbildungen und vorteilhafte Ausgestaltungen der Erfindung sind in den Unteransprüchen angegeben.

Die Erfindung bietet insbesondere den Vorteil, mit einfachen Mitteln die Stellkraft der Stelleinrichtung druckabhängig steuern zu können.

Die erfindungsgemäße Einrichtung weist einen einfachen Aufbau auf und ist kostengünstig in ihrer Herstellung.

Erfindungsgemäß ist der Druckmittelanschluß einer aus nur einem Drucksensor bestehenden Drucksensoreinrichtung an eine Druckmittelleitung angeschlossen, welche den Druckmitteleingang einer ersten steuerbaren Ventileinrichtung und den Druckmitteleingang einer zweiten steuerbaren Ventileinrichtung für die Stelleinrichtung mit dem Druckmittelausgang einer dritten steuerbaren Ventileinrichtung verbindet, deren Druckmitteleingang mit einer Druckmittelquelle verbunden ist. Dadurch ist es möglich, mit nur einem Drucksensor sowohl die Höhe des Druckes in jeder der beiden Druckmittelkammern der Stelleinrichtung zu messen als auch die Höhe des Versorgungsdruckes für die Stelleinrichtung zu überwachen.

Ferner sind die Druckmitteleingänge von zwei weiteren Ventileinrichtungen, welche den beiden Druckmittelkammern einer zweiten Stelleinrichtung zugeordnet sind, mit der Druckmittelleitung verbunden, welche den Druckmittelausgang der dritten Ventileinrichtung mit den Druckmitteleingängen der beiden Ventileinrichtungen der ersten Stelleinrichtung und der Drucksensoreinrichtung verbindet. Durch diese Weiterbildung der Erfindung können auf einfache Weise zwei Stelleinrichtungen mit nur einer zusätzlichen steuerbaren Ventileinrichtung und nur einer Drucksensoreinrichtung druckabhängig gesteuert werden. Der Druck in jeder der Druckmittelkammern der beiden Stelleinrichtungen und der Versorgungsdruck können mit nur einer Drucksensoreinrichtung gemessen werden.

Vorteilhafterweise ist zwischen dem Druckmittelausgang der dritten steuerbaren Ventileinrichtung und den Druckmitteleingängen der beiden steuerbaren Ventileinrichtungen der Stelleinrichtung eine Drossel angeordnet. Die Drossel verhindert, daß während einer Steuerphase der Druck an der Drucksensoreinrichtung auf das Niveau des Vorratsdruckes ansteigt. Der am Drucksensor auftretende Druck entspricht deshalb mehr dem Druck in einer Druckmittelkammer der Stelleinrichtung.

Vorteilhafterweise ist die Stelleinrichtung mit einem Wegsensor ausgerüstet, so daß der Kolben der Stelleinrichtung in Abhängigkeit von den Signalen des Wegsensors in jede vorbestimmbare Position gebracht werden kann.

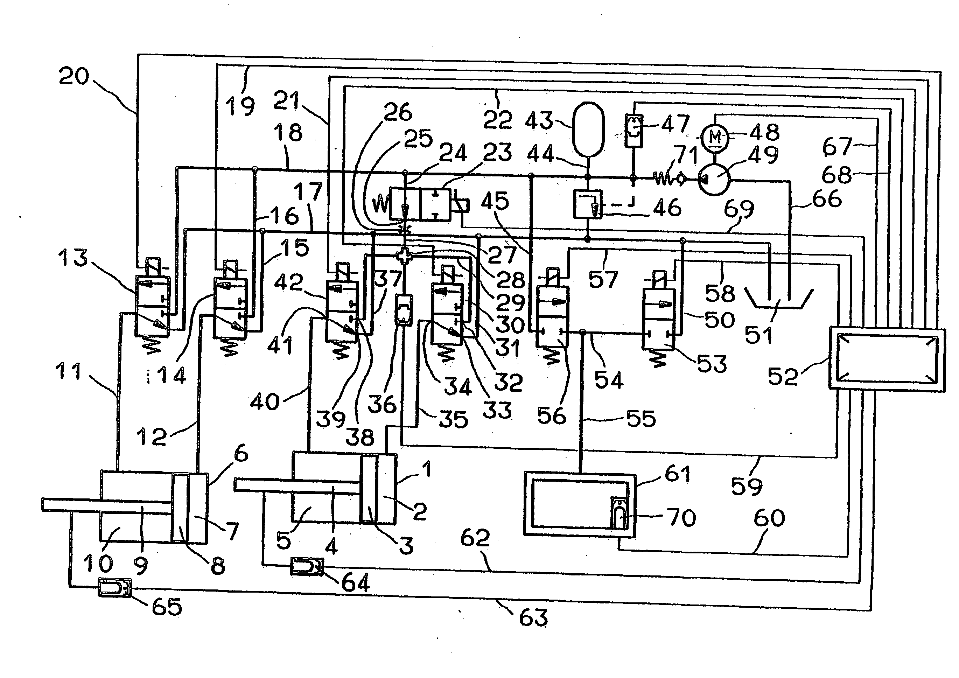

Anhand der Zeichnung wird nachfolgend ein Ausführungsbeispiel der Erfindung näher erläutert.

Die Abbildung zeigt vereinfacht eine Einrichtung zum Steuern eines Getriebes.

Die Einrichtung weist einen ersten doppeltwirkenden Arbeitszylinder und einen zweiten doppeltwirkenden Arbeitszylinder auf, wobei der erste Arbeitszylinder als eine erste Stelleinrichtung (1) und der zweite Arbeitszylinder als eine zweite Stelleinrichtung (6) dient. Die erste Stelleinrichtung (1) weist eine erste Druckmittelkammer (2) und eine zweite Druckmittelkammer (5) auf, die durch einen in Richtung seiner Längsachse bewegbaren Kolben (3) voneinander getrennt sind. Auf dem Umfang des Kolbens (3) ist ein nicht dargestellter Dichtring angeordnet, der dichtend an der Wand der Stelleinrichtung anliegt. Am Kolben (3) ist zentrisch eine als Stellglied (4) dienende Kolbenstange angeordnet. Die zweite Stelleinrichtung (6) weist eine erste Druckmittelkammer (7) und eine zweite Druckmittelkammer (10) auf, die durch einen in Richtung seiner Längsachse bewegbaren Kolben (8) voneinander getrennt sind. Auf dem Umfang des Kolbens (8) ist ein nicht dargestellter Dichtring angeordnet, der dichtend an der Wand der Stelleinrichtung anliegt. Eine als Stellglied (9) dienende Kolbenstange ist zentrisch am Kolben (8) angeordnet. Die erste Stelleinrichtung (1) und die zweite Stelleinrichtung (6) stehen mit einem Schaltfinger oder einer Schaltwelle eines nicht dargestellten Getriebes in Wirkverbindung. Die erste Stelleinrichtung (1) dient zum Verschieben der Zahnräder des Getriebes auf der Getriebewelle und die zweite Stelleinrichtung (6) dient zum Verschieben des Schaltfingers bzw. der Schaltwelle in der Schaltgasse des Getriebes.

Die erste Druckmittelkammer (2) der ersten Stelleinrichtung (1) ist über eine Druckmittelleitung (35) mit einem Druckmittelausgang (34) einer ersten steuerbaren Ventileinrichtung (30) verbunden. Die zweite Druckmittelkammer (5) der ersten Stelleinrichtung (1) steht über eine Druckmittelleitung (40) mit einem Druckmittelausgang (41) einer zweiten steuerbaren Ventileinrichtung (42) in Verbindung. Eine Druckmittelleitung (29) verbindet einen Druckmitteleingang (32) der ersten Ventileinrichtung (30) mit einem Druckmitteleingang (38) der zweiten Ventileinrichtung (42). Über ein Verzweigungsteil (28) und eine Druckmittelleitung (27) ist die Druckmittelleitung (29) einerseits an einen Druckmittelausgang (25) einer als Absperrventil dienenden dritten steuerbaren Ventileinrichtung (23) und andererseits an einen Druckmittelanschluß einer von einem Drucksensor gebildeten Drucksensoreinrichtung (36) angeschlossen. Zwischen dem Druckmittelausgang (25) der dritten Ventileinrichtung (23) und dem Verzweigungsteil (28) ist in der Druckmittelleitung (27) eine Drossel (26) angeordnet.

Ein Druckmitteleingang (24) der dritten Ventileinrichtung (23) ist über eine Druckmittelleitung mit einer als Versorgungsleitung dienenden Druckmittelleitung (18) verbunden. Die Druckmittelleitung (18) ist an den Druckmittelausgang einer als Druckerzeugungseinrichtung dienenden Druckmittelpumpe (49) und über eine von der Druckmittelleitung (18) abzweigende Druckmittelleitung (44) an einen Druckmittelspeicher (43) angeschlossen. Der Druckmittelspeicher (43) steht über die Druckmittelleitung (44) mit einem Druckregelventil (46) in Verbindung. Dem Druckmittelausgang der Druckmittelpumpe (49) ist ein in Richtung auf die Druckmittelpumpe (49) zu sperrendes Rückschlagventil (71) nachgeschaltet. Ein Eingang der Druckmittelpumpe (49) ist über eine Fluidleitung (66) mit einem auch als Druckmittelsenke dienenden Behälter (51) für ein flüssiges Medium, wie zB. Hydrauliköl, verbunden. Als Antrieb für die Druckmittelpumpe (49) dient ein Motor (48).

Ein Druckmittelauslaß (33) der ersten Ventileinrichtung (30) steht über eine Druckmittelleitung (31) und eine mit dieser verbundene weitere Druckmittelleitung (17) mit dem Behälter (51) in Verbindung. Desgleichen ist ein Druckmittelauslaß (39) der zweiten Ventileinrichtung (42) über eine Druckmittelleitung (37), die ebenfalls an die Druckmittelleitung (17) angeschlossen ist, mit dem Behälter (51) verbunden. An die als Versorgungsleitung dienende Druckmittelleitung (18) ist ein weiterer Drucksensor (47) angeschlossen, der zur Überwachung des Versorgungsdruckes dient.

Die erste Ventileinrichtung (30) und die zweite Ventileinrichtung (42) sind als 3/2-Wege-Elektromagnetventile ausgebildet. Die dritte Ventileinrichtung (23) ist als 2/2-Wege-Elektromagnetventil ausgebildet. Über elektrische Leitungen (22, 21, 69) sind die Elektromagneten der drei Ventileinrichtungen (30, 42, 23) mit den ihnen zugeordneten Ausgängen einer elektrischen Steuereinrichtung (52) elektrisch verbunden. Die Drucksensoreinrichtung (36) und der Drucksensor (47) sind über elektrische Leitungen (59, 68) mit ihnen zugeordneten Eingängen der elektrischen Steuereinrichtung (52) elektrisch verbunden.

Zum Verbinden der Eingangswelle des Getriebes mit einer Ausgangswelle eines nicht dargestellten Motors dient ein druckmittelbetätigbarer Kupplungszylinder (61). Der Kupplungszylinder (61) ist über eine Einlaß- und Auslaßventileinrichtung (56, 53) wahlweise mit der Druckmittelquelle (43, 49) oder mit dem als Druckmittelsenke dienenden Behälter (51) verbindbar oder gegen beide absperrbar.

Die Einlaß- und Auslaßventileinrichtung (56, 53) besteht aus einem ersten 2/2-Wege-Elektromagnetventil (56) und einem zweiten 2/2-Wege-Elektromagnetventil (53), die über elektrische Leitungen (57, 58) mit ihnen zugeordneten Ausgängen der elektrischen Steuereinrichtung (52) verbunden sind. Der Druckmitteleingang des ersten 2/2-Wege-Elektromagnetventils (56) steht über eine Druckmittelleitung (45) mit der als Versorgungsleitung dienenden Druckmittelleitung (18) in Verbindung. Der Druckmittelausgang dieses Elektromagnetventils (56) ist über eine Druckmittelleitung (54) und eine an diese angeschlossene Druckmittelleitung (55) mit einer Druckmittelkammer des Kupplungszylinders (61) verbunden. Die Druckmittelleitungen (54, 55) dienen gleichzeitig zum Verbinden der Druckmittelkammer des Kupplungszylinders (61) mit dem Druckmitteleingang des zweiten 2/2-Wege-Elektromagnetventils (53). Der Druckmittelausgang dieses Elektromagnetventils (53) ist über eine Druckmittelleitung (50) und die mit dieser verbundenen Druckmittelleitung (17) mit dem als Druckmittelsenke dienenden Behälter (51) verbunden. Ein dem Kupplungszylinder (61) zugeordneter Wegsensor (70) zum Messen des Kupplungs-Stellweges steht über eine elektrische Leitung (60) mit einem Eingang der elektrischen Steuereinrichtung (52) in Verbindung.

Dem Kolben (3) oder dem Stellglied (4) der als doppeltwirkender Arbeitszylinder ausgebildeten ersten Stelleinrichtung (1) ist ebenfalls ein Wegsensor (64) zum Aufnehmen des vom Kolben (3) oder vom Stellglied (4) zurückgelegten Weges -messen des Stellweges- zugeordnet. Der Wegsensor (64) ist über, eine elektrische Leitung (62) mit einem Eingang der elektrischen Steuereinrichtung (52) verbunden. Der Motor (48) zum Antreiben der Druckmittelpumpe (49) steht über eine elektrische Leitung (67) mit einem Ausgang der elektrischen Steuereinrichtung (52) in Verbindung.

Die erste Druckmittelkammer (7) der erwähnten zweiten Stelleinrichtung (6) ist über eine Druckmittelleitung (12) mit dem Druckmittelausgang einer als 3/2-Wege-Elektromagnetventil ausgebildeten ersten steuerbaren Ventileinrichtung (14) verbunden. Der Druckmitteleingang der ersten Ventileinrichtung (14) steht über eine Druckmittelleitung (16) mit der als Versorgungsleitung dienenden Druckmittelleitung (18) in Verbindung. Der Druckmittelauslaß der ersten Ventileinrichtung (14) ist über eine Druckmittelleitung (15) mit der zur Druckmittelsenke hinführenden Druckmittelleitung (17) verbunden. Die zweite Druckmittelkammer (10) der zweiten Stelleinrichtung (6) ist über eine Druckmittelleitung (11) mit dem Druckmittelausgang einer als 3/2-Wege-Elektromagnetventil ausgebildeten zweiten steuerbaren Ventileinrichtung (13) verbunden. Der Druckmitteleingang der zweiten Ventileinrichtung (13) ist mit der als Versorgungsleitung dienenden Druckmittelleitung (18) verbunden. Der Druckmittelauslaß der zweiten Ventileinrichtung (13) steht über die Druckmittelleitung (17) mit der Druckmittelsenke in Verbindung. Die Elektromagneten dieser beiden Elektromagnetventile (14, 13) sind über elektrische Leitungen (19, 20) mit ihnen zugeordneten Ausgängen der elektrischen Steuereinrichtung (52) verbunden. Ein dem Kolben (8) oder dem Stellglied (9) der zweiten Stelleinrichtung (6) zugeordneter Wegsensor (65) zum Messen des Stellweges steht über eine elektrische Leitung (63) mit einem Eingang der elektrischen Steuereinrichtung (52) in Verbindung.

Die Funktion der vorstehend beschriebenen Einrichtung wird nachfolgend näher erläutert.

Es wird angenommen, daß die Einrichtung zum Steuern eines in einem Kraftfahrzeug angeordneten Getriebes dient. In der gezeigten Stellung der ersten Ventileinrichtung (30) und der zweiten Ventileinrichtung (42) der ersten Stelleinrichtung (1) sind die Druckmittelkammern (2, 5) der ersten Stelleinrichtung (1) gegen die von der Druckmittelpumpe (49) und dem Druckmittelspeicher (43) gebildete Druckmittelquelle (43, 49) abgesperrt und mit dem Behälter (51) für Hydrauliköl (Druckmittelsenke) verbunden. Die den beiden Ventileinrichtungen (30, 42) vorgeschaltete, als Absperrventil dienende dritte Ventileinrichtung (23) ist auf Durchgang geschaltet. Die aus einem einzigen Drucksensor bestehende Drucksensoreinrichtung (36) wird mit dem an den Druckmitteleingängen (32, 38) der beiden steuerbaren Ventileinrichtungen (30, 42) anstehenden Druck der Druckmittelquelle (43, 49) (Versorgungsdruck) beaufschlagt und liefert ein dem Druck entsprechendes elektrisches Signal an die elektrische Steuereinrichtung (52). Ebenso sind die beiden Druckmittelkammern (7, 10) der zweiten Stelleinrichtung (6) mittels der ihnen zugeordneten steuerbaren Ventileinrichtungen (14, 13) gegen die Druckmittelquelle (43, 49) abgesperrt und mit dem Behälter (51) verbunden. Der Kupplungszylinder (61) ist mittels der beiden ihm zugeordneten steuerbaren Ventileinrichtungen (56, 53) gegen die Druckmittelquelle (43, 49) und gegen den Behälter (51) abgesperrt.

Soll ein Gang des Getriebes eingelegt werden, wird von einer nicht dargestellten Schaltstufen-Wähleinrichtung ein entsprechendes Signal auf die elektrische Steuereinrichtung (52) gegeben. Von der elektrischen Steuereinrichtung (52) werden dann in einer vorgegebenen Reihenfolge die dem Kupplungszylinder (61) zugeordnete, als Einlaßventil dienende Ventileinrichtung (56), die der zweiten Stelleinrichtung (6) zugeordnete erste Ventileinrichtung (14) sowie die der ersten Stelleinrichtung (1) zugeordnete erste Ventileinrichtung (30) elektrisch angesteuert. Die dem Kupplungszylinder (61) zugeordnete, als Einlaßventil dienende Ventileinrichtung (56) gelangt dann in ihre Offenstellung. Der Kupplungszylinder (61) wird mit Druckmittel beaufschlagt, wodurch die Kupplung in ihre Lösestellung gebracht wird.

Dann wird die erste Ventileinrichtung (14) der zweiten Stelleinrichtung (6) so umgeschaltet, daß die erste Druckmittelkammer (7) der zweiten Stelleinrichtung (6) gegen die Druckmittelsenke abgesperrt und mit der Druckmittelquelle (43, 49) verbunden wird. Der Kolben (8) der als Gassenzylinder dienenden zweiten Stelleinrichtung (6) wird vom Druckmittel in Richtung auf die zweite Druckmittelkammer (10) zu verschoben. Dabei wird der über das Stellglied (9) mit dem Kolben (8) verbundene Schaltfinger bzw. die Schaltwelle des Getriebes in der Schaltgasse verschoben, so weit, bis dieser bzw. diese eine vorbestimmte Position erreicht hat. Anhand des vom Wegsensor (65) abgegebenen Signals erkennt die elektrische Steuereinrichtung (52), daß der Schaltfinger bzw. die Schaltwelle die gewünschte Position erreicht hat. Das Steuersignal an der ersten Ventileinrichtung (14) der zweiten Stelleinrichtung (6) fällt dann ab, wodurch bewirkt wird, daß die erste Ventileinrichtung die erste Druckmittelkammer (7) gegen die Druckmittelquelle (43, 49) absperrt und mit der Druckmittelsenke verbindet.

Dann wird die der ersten Stelleinrichtung (1) zugeordnete erste Ventileinrichtung (30) in der Weise umgeschaltet, daß sie die erste Druckmittelkammer (2) der ersten Stelleinrichtung (1) gegen die Druckmittelsenke absperrt und über die dritte Ventileinrichtung (23) mit der Druckmittelquelle (43, 49) verbindet. Der Kolben (3) der als Gangzylinder dienenden ersten Stelleinrichtung (1) wird dann vom Druckmittel in Richtung auf die zweite Druckmittelkammer (5) zu angetrieben. Dabei wird der über das Stellglied (4) mit dem Kolben (3) verbundene Schaltfinger bzw. die Schaltwelle des Getriebes im Sinne des miteinander Ineingriffbringens zweier Zahnräder verschoben.

Der Druck, welcher in die erste Steuerkammer (2) der ersten Stelleinrichtung (1) eingesteuert wird, wird nach einer Tabelle geregelt, die in einer in der elektrischen Steuereinrichtung (52) angeordneten Elektronik abgelegt ist.

Die Drucksensoreinrichtung (36) mißt permanent den Druck in der ersten Druckmittelkammer (2) der ersten Stelleinrichtung (1) und liefert dem Druck in der ersten Druckmittelkammer (2) entsprechende elektrische Signale an die elektrischen Steuereinrichtung (52). Die Höhe des Druckes in der ersten Druckmittelkammer (2) stellt die auf den Kolben (8) und somit die auf die zu schaltenden Getriebeteile ausgeübte Schaltkraft dar. Gleichzeitig gelangen von dem der ersten Stelleinrichtung (1) zugeordneten Wegsensor (64) dem vom Kolben (3) zurückgelegten Weg entsprechende elektrische Signale zu der elektrischen Steuereinrichtung (52).

Die elektrische Steuereinrichtung (52) weist Mittel auf, welche die Signale der Drucksensoreinrichtung (36) und die Signale des Wegsensors (64) auswerten und Steuersignale auf die dritte Ventileinrichtung (23) geben, wenn der ermittelte Ist-Druck-Wert einem in einer Tabelle abgelegten Soll-Druck-Wert entspricht oder von diesem abweicht und/oder wenn der ermittelte Ist-Weg-Wert einem in einer Tabelle abgelegten Soll-Weg-Wert entspricht oder von diesem abweicht, je nachdem, ob als Schaltkriterium eine Differenz oder Gleichheit zwischen dem Ist-Druck-Wert und dem Soll-Druck-Wert bzw. zwischen dem Ist-Weg-Wert und dem Soll-Weg-Wert dienen soll.

Da in der Anfangsphase des Schaltvorganges eine relativ große Betätigungskraft wirksam werden soll, der Schaltvorgang dann mit einer nur langsam zunehmenden Betätigungskraft fortgesetzt und dann mit einer schneller zunehmenden Betätigungskraft zu Ende geführt werden soll, wird von der elektrischen Steuereinrichtung (52) ein von den vorstehend erwähnten Signalen, wenigstens aber von den Signalen der Drucksensoreinrichtung (36) abhängiges, beispielsweise pulsbreitenmoduliertes Signal mit variierendem Tastverhältnis auf den Elektromagneten der dritten Ventileinrichtung (23) gegeben. Die dritte Ventileinrichtung (23) gelangt dadurch wechselweise in ihre Schließstellung und in ihre Offenstellung, wobei die Dauer der Schließstellung und die Dauer der Offenstellung der dritten Ventileinrichtung (23) entsprechend dem Signal der elektrischen Steuereinrichtung (52) kürzer oder länger ist. Der Druckanstieg in der ersten Druckmittelkammer (2) erfolgt dadurch nach einer Kennlinie, die erst einen steileren Anstieg aufweist, dann einen weniger steilen Anstieg aufweist oder, wenn es gewünscht wird, flach ist und daran anschließend wieder einen steileren Anstieg aufweist.Die Stellgeschwindigkeit des Stellgliedes (4) ist dementsprechend zuerst groß, verringert sich dann und erhöht sich anschließend wieder.

Die Tabelle, nach welcher die Druckeinsteuerung in die erste Druckmittelkammer (2) erfolgt ist so aufgebaut, daß das zum Ansteuern der dritten Ventileinrichtung (23) dienende Steuersignal von der elektrischen Steuereinrichtung (52) dann abgegeben wird, wenn von der Elektronik anhand des von der Drucksensoreinrichtung (36) abgegebenen Ausgangssignals erkannt wird, daß der Druck in der Druckmittelkammer (2) eine Höhe erreicht hat, ab welcher gemäß der Tabelle der weitere Druckanstieg nach einer Kennlinie mit einer weniger steilen Steigung erfolgen soll, um eine Betätigungskraft zu erzeugen, die nicht mehr so schnell zunimmt und /oder wenn die Elektronik vom Wegsensor (64) ein Signal erhält, welches einem in der Tabelle abgelegten bestimmten Weg-Wert entspricht. Das Steuersignal für die dritte Ventileinrichtung (23) wird dann von der Elektronik so modifiziert, daß die Steuersignalpausen kurz sind. Der Druckanstieg in der ersten Druckmittelkammer (2) erfolgt dann nur noch mit kleineren Druckstufen. Dadurch verringert sich die Stellgeschwindigkeit des Stellgliedes (4) und die auf das Stellglied (4) einwirkende Betätigungskraft nimmt nur noch langsam zu.

Erkennt die Elektronik beim weiteren Abarbeiten der Tabelle anhand des Signals des Wegsensors (64) der ersten Stelleinrichtung (1), daß das Stellglied (4) und somit auch der Schaltfinger bzw. die Schaltwelle des Getriebes einen durch die Tabelle vorgegebenen weiteren Wegabschnitt zurückgelegt hat, und daß der von der Drucksensoreinrichtung (36) übermittelte Ist-Druck-Wert nicht dem in der Tabelle abgelegten neuen Soll-Druck-Wert entspricht, verändert sie das Steuersignal für die dritte Ventileinrichtung (23) in der Weise, daß die Steuersignalpausen relativ lang sind. Der Druckanstieg in der ersten Druckmittelkammer (2) erfolgt dann mit größeren Druckstufen. Dadurch vergrößert sich die Stellgeschwindigkeit des Stellgliedes (4) und die auf das Stellglied (4) einwirkende Betätigungskraft nimmt dann wieder schneller zu.

Der Druck in der ersten Druckmittelkammer (2) wird von der Drucksensoreinrichtung (36) ständig auf das Einhalten der von der Tabelle vorbestimmten unterschiedlichen Höhen überwacht. Das Steuersignal für die dritte Ventileinrichtung (23) wird bei Abweichungen des Ist-Wertes der Druckhöhe in der ersten Druckmittelkammer (2) von dem durch die Tabelle vorgegebenen Soll-Wert für die Druckhöhe von der Elektronik korrigiert.

Hat der Kolben (3) und somit das Stellglied (4) einen Weg zurückgelegt, welcher dem erforderlichen Schaltweg des Schaltfingers bzw. der Schaltwelle des Getriebes entspricht, um den gewünschten Gang einzulegen, bewirkt das diesem Weg entsprechende Signal des Wegsensors (64), daß die Steuersignale an der der ersten Stelleinrichtung (1) zugeordneten ersten Ventileinrichtung (30) und an der dritten Ventileinrichtung (23) abfallen. Die erste Ventileinrichtung (30) der ersten Stelleinrichtung (1) und die dritte Ventileinrichtung (23) gelangen dann wieder in ihre Ausgangsstellung, in welcher die erste Druckmittelkammer (2) der ersten Stelleinrichtung (1) wieder gegen die Druckmittelquelle (43, 49) abgesperrt und mit der Druckmittelsenke verbunden ist. Die dritte Ventileinrichtung (23) verbindet dann wieder die Eingänge der ersten Ventileinrichtung (30) und der zweiten Ventileinrichtung (42) mit der Druckmittelquelle (43, 49).

Nach Beendigung des Schaltvorganges fällt auch das elektrische Steuersignal an der dem Kupplungszylinder (61) zugeordneten, als Einlaßventil dienenden Ventileinrichtung (56) ab und die als Auslaßventil für den Kupplungszylinder dienende Ventileinrichtung (53) erhält von der elektrischen Steuereinrichtung (52) ein Steuersignal. Das Auslaßventil gelangt dann in seine Offenstellung und verbindet die Druckmittelkammer des Kupplungszylinders (61) mit der Druckmittelsenke. Die Kupplung gelangt dann wieder in ihre den Motor mit dem Getriebe verbindende Stellung. In Abhängigkeit von einem Ausgangssignal des dem Kupplungszylinder (61) zugeordneten Wegsensors (70) fällt dann das Steuersignal an der als Auslaßventil dienenden Ventileinrichtung (53) ab, so daß die Ventileinrichtung (53) wieder in ihre Schließstellung gelangt.

Soll das Getriebe in seine Leerlaufstellung geschaltet werden, wird von der elektrischen Steuereinrichtung (52) zuerst die dem Kupplungszylinder (61) zugeordnete, als Einlaßventil dienende Ventileinrichtung (56) und dann die der zweiten Druckmittelkammer (5) der ersten Stelleinrichtung (1) zugeordnete zweite Ventileinrichtung (42) angesteuert. Die Kupplung gelangt dann in ihre Lösestellung. Die zweite Ventileinrichtung (42) wird so umgeschaltet, daß sie die zweite Druckmittelkammer (5) gegen die Druckmittelsenke absperrt und über die geöffnete dritte Ventileinrichtung (23) mit der Druckmittelquelle (43, 49) verbindet. Von dem sich in der zweiten Druckmittelkammer (5) dann aufbauenden Druck wird der Kolben (3) in Richtung auf die erste Druckmittelkammer (2) der ersten Stelleinrichtung (1) zu verschoben. Der Wegsensor (64) der ersten Stelleinrichtung (1) mißt permanent den vom Kolben (3) zurückgelegten Weg und gibt dem Weg entsprechende Signale auf die elektrische Steuereinrichtung (52). Wird von der elektrischen Steuereinrichtung (52) erkannt, daß der Kolben (3) seine neutrale Mittelstellung erreicht hat, beendet die Steuereinrichtung (52) das entsprechende Steuersignal an der zweiten Ventileinrichtung (42). Die zweite Ventileinrichtung (42) gelangt dann wieder in Ihre Ausgangsstellung zurück. Der Kolben (3) bleibt dann in seiner neutralen Mittelstellung stehen. Aufgrund der Inkompressibilität der Hydraulikflüssigkeit ändert sich die Stellung des Kolbens (3) dann nicht mehr.

An diesen Vorgang anschließend wird das Steuersignal an der als Einlaßventil des Kupplungszylinders (61) dienenden Ventileinrichtung (56) beendet. Die Ventileinrichtung (56) gelangt dann wieder in ihre Ausgangsstellung zurück. Über die als Auslaßventil des Kupplungszylinders (61) dienende Ventileinrichtung (53) wird bei Anliegen eines entsprechenden Steuersignals der elektrischen Steuereinrichtung (52) die Druckmittelkammer des Kupplungszylinders (61) mit der Druckmittelsenke verbunden. Die Kupplung gelangt dann in ihre den Motor mit dem Getriebe verbindende Stellung.

Das Anhalten des Kolbens (3) in seiner Mittelstellung kann jedoch auch über die Ansteuerung der dritten Ventileinrichtung (23) erfolgen, welche dann den Druckmitteleingang (38) der zweiten Ventileinrichtung (42) gegen die Druckmittelquelle (43, 49) absperrt.

Das Beenden des Steuersignals an der zweiten Ventileinrichtung (42) oder das Ansteuern der dritten Ventileinrichtung (23) kann erfolgen, wenn der Kolben (3) seine Mittelstellung erreicht hat oder kurz bevor der Kolben (3) seine Mittelstellung erreicht. Wird als Druckmedium ein flüssiges Medium, wie z.B. Hydrauliköl, verwendet, wird die Ventileinrichtung (42 bzw. 23) dann umgeschaltet, wenn der Kolben (3) seine Mittelstellung erreicht hat. Wird als Druckmedium ein gasförmiges Medium verwendet, welches aufgrund seiner Kompressibilität ein genaues Positionieren des Kolbens erschwert, wird die Ventileinrichtung (42 bzw. 23) umgeschaltet, kurz bevor der Kolben (3) seine Mittelstellung erreicht hat.

Wird ein Gang gewählt, der eine Schaltbewegung des Stellgliedes (4) der ersten Stelleinrichtung (1) in Richtung auf die erste Druckmittelkammer (2) zu erforderlich macht, so erfolgt die Druckmitteleinsteuerung in die zweite Druckmittelkammer (5) in der gleichen Art und Weise wie bei dem vorstehend beschriebenen Schaltvorgang die Druckmitteleinsteuerung in die erste Druckmittelkammer (2) erfolgt ist. Anstelle der ersten Ventileinrichtung (30) wird jedoch die zweite Ventileinrichtung (42) umgeschaltet, in der Weise, daß sie die zweite Druckmittelkammer (5) gegen die Druckmittelsenke absperrt und mit der Druckmittelquelle (43, 49) verbindet.

Dadurch, daß zwischen den der ersten Stelleinrichtung (1) zugeordneten beiden Ventileinrichtungen (30, 42) und der Druckmittelquelle (43, 49) die dritte Ventileinrichtung (23) angeordnet ist und die Ansteuerung der dritten Ventileinrichtung (23) unter anderem in Abhängigkeit von den Signalen der Drucksensoreinrichtung (36) gebracht wird, läßt sich sowohl die Schaltkraft als auch die Schaltgeschwindigkeit als auch der Schaltweg der Stelleinrichtung (1) auf einfache Art und Weise verändern.

Die als Druckerzeugungseinrichtung dienende Druckmittelpumpe (49) oder bei einer mit Druckluft betriebenen Einrichtung ein als Druckerzeugungseinrichtung dienender Kompressor oder auch der Motor (48) zum Antreiben der Druckerzeugungseinrichtung wird wenigstens in den Steuerphasen, in denen die Ventileinrichtung (23) sich in ihrer Offenstellung befindet, mittels eines Steuersignals der elektrischen Steuereinrichtung (52) eingeschaltet, wenn der Druck im Druckmittelspeicher (43) oder in der Versorgungsleitung einen unteren Druckwert erreicht oder unterschreitet, und wird ausgeschaltet, wenn der Druck im Druckmittelspeicher (43) oder in der Versorgungsleitung einen oberen Druckwert erreicht oder überschreitet. Das Steuersignal wird in Abhängigkeit von den Signalen des an die Versorgungsleitung angeschlossenen Drucksensors (47), der den Versorgungsdruck ständig überwacht, oder in Abhängigkeit von den Signalen der der dritten Ventileinrichtung (23) nachgeschalteten Drucksensoreinrichtung (36) gebracht.

Der Drucksensor (47) wird jedoch nicht benötigt, wenn die den beiden Ventileinrichtungen (30, 42) der ersten Stelleinrichtung (1) zugeordnete Drucksensoreinrichtung (36) mit der elektrischen Steuereinrichtung (52) so verknüpft ist, daß ihre Signale auch einer für die Steuerung des Motors (48) oder einer für die Steuerung der Druckerzeugungseinrichtung zuständigen Auswerteeinrichtung der elektrischen Steuereinrichtung (52) zugeführt werden.

Durch die Anordnung der Drossel (26) zwischen dem Druckmittelausgang (25) der dritten Ventileinrichtung (23) und den Druckmitteleingängen (32, 38) der ersten Ventileinrichtung (30), der zweiten Ventileinrichtung (42) und der Drucksensoreinrichtung (36) oder durch die Ausbildung der dritten Ventileinrichtung als Drosselventil wird erreicht, daß während eines Druckregelvorganges am Ausgang der dritten Ventileinrichtung (23), aufgrund des hohen Vorratsdruckes, kurzzeitig auftretende Druckschwankungen sich gar nicht oder nur unwesentlich auf den momentanen Druck in der Druckmittelleitung (27) auswirken. Dadurch wird verhindert, daß der in der Steuerphase am Drucksensor (36) auftretende Druck auf das Druckniveau des Versorgungsdruckes in der Druckmittelleitung (18) ansteigt. Der am Drucksensor (36) auftretende Druck entspricht deshalb mehr dem Druck in der Druckmittelkammer (2 bzw. 5) der Stelleinrichtung (1).

Gemäß der Erfindung ist es auch möglich, eine Drucksensoreinrichtung vorzusehen, die einen ersten Drucksensor und einen zweiten Drucksensor aufweist. Der erste Drucksensor ist dann direkt mit der ersten Druckmittelkammer (2) und der zweite Drucksensor ist dann direkt mit der zweiten Druckmittelkammer (5) der Stelleinrichtung (1) verbunden. Die beiden Drucksensoren sind mit der elektrischen Steuereinrichtung (52) elektrisch verbunden.Das Ansteuern wenigstens einer der steuerbaren Ventileinrichtungen ist dann in Abhängigkeit von wenigstens den Signalen des Drucksensors bringbar, welcher den Druck in der Druckmittelkammer überwacht, deren Druck beeinflußt werden soll.

Gemäß der Erfindung kann die dritte steuerbare Ventileinrichtung auch aus einem ersten steuerbaren Absperrventil und einem zweiten steuerbaren Absperrventil bestehen. Das erste Absperrventil ist dann zwischen dem Druckmitteleingang (32) der ersten steuerbaren Ventileinrichtung (30) und der Druckmittelquelle (43, 49) angeordnet und das zweite Absperrventil ist dann zwischen dem Druckmitteleingang (38) der zweiten steuerbaren Ventileinrichtung (42) und der Druckmittelquelle (43, 49) angeordnet. Die beiden Absperrventile können als 2/2-Wege-Elektromagnetventile ausgebildet sein. Bei einer solchen Ausführung der erfindungsgemäßen Einrichtung kann der erste Drucksensor zwischen dem Druckmittelausgang des ersten Absperrventils und dem Druckmitteleingang (32) der ersten Ventileinrichtung (30) und der zweite Drucksensor zwischen dem Druckmittelausgang des zweiten Absperrventils und dem Druckmitteleingang (38) der zweiten Ventileinrichtung (42) angeordnet sein.

Gemäß einer anderen Ausführung der Erfindung ist es auch möglich, die erste steuerbare Ventileinrichtung so auszubilden, z.B. als elektromagnetisch betätigbares 4/3-Wegeventil, und so mit der ersten Druckmittelkammer (2) der Stelleinrichtung (1) und mit der Druckmittelquelle (43, 49) zu verbinden, daß mittels dieser Ventileinrichtung die erste Druckmittelkammer (2) wahlweise mit der Druckmittelquelle (43, 49) oder mit der Druckmittelsenke verbindbar oder gegen beide absperrbar ist. In gleicher Weise kann dann die zweite Ventileinrichtung so ausgebildet werden, z.B. als elektromagnetisch betätigbares 4/3-Wegeventil, und so mit der zweiten Druckmittelkammer (5) der Stelleinrichtung (1) und mit der Druckmittelquelle (43, 49) verbunden werden, daß die zweite Druckmittelkammer (5) mittels der zweiten Ventileinrichtung wahlweise mit der Druckmittelquelle (43, 49) oder mit der Druckmittelsenke verbindbar oder gegen beide absperrbar ist. Die so ausgebildeten Ventileinrichtungen werden dann von der Elektronik der elektrischen Steuereinrichtung (52) in der gleichen Art und Weise angesteuert wie die dritte Ventileinrichtung (23), die erste Ventileinrichtung (30) und die zweite Ventileinrichtung (42) gemäß dem Ausführungsbeispiel. Eine dritte Ventileinrichtung, wie sie gemäß dem vorstehend beschriebenen Ausführungsbeispiel zwischen der Druckmittelquelle (43, 49) und den den Druckmittelkammern (2, 5) der Stelleinrichtung (1) zugeordneten Ventileinrichtungen angeordnet ist, ist bei dieser Ausführungsform der Erfindung nicht erforderlich.

Bei einer solchen Ausführung der erfindungsgemäßen Einrichtung ist der erste Drucksensor direkt mit der ersten Druckmittelkammer (2) und der zweite Drucksensor direkt mit der zweiten Druckmittelkammer (5) der Stelleinrichtung (1) verbunden.

Gemäß der Erfindung kann die elektrische Steuereinrichtung (52) auch so ausgebildet sein, daß sie die erste Ventileinrichtung, die zweite Ventileinrichtung oder auch die dritte Ventileinrichtung so ansteuert, daß bei einem Druckeinsteuervorgang in die eine Druckmittelkammer (2 oder 5), bei Unterbrechen der Druckmittelzufuhr zu dieser Druckmittelkammer (2 oder 5), der Druckmittelabbau in der jeweils anderen Druckmittelkammer (5 oder 2) ebenfalls unterbrochen wird. Durch diese Maßnahme kann sicher verhindert werden, daß der Kolben über die gewünschte Position hinausfährt. Eine solche Drucksteuerung setzt jedoch voraus, daß die erste Ventileinrichtung und die zweite Ventileinrichtung so ausgebildet sind, daß sie die ihnen zugeordneten Druckmittelkammern wahlweise mit der Druckmittelquelle oder mit der Druckmittelsenke verbinden oder gegen beide absperren können, oder daß die dritte Ventileinrichtung von zwei Absperrventilen gebildet wird.

Es ist gemäß der Erfindung auch möglich, die elektrische Steuereinrichtung (52) so auszubilden, daß bei einem Stellvorgang beide Druckmittelkammern (2, 5) der Stelleinrichtung (1) mit Druckmittel beaufschlagt sind, und daß eine Bewegung des mit dem Kolben (3) verbundenen Stellgliedes (4) durch geregelten Abbau des Druckes in der einen der beiden Druckmittelkammern (2, 5) erreicht wird. Die Ausbildung und die Anordnung der Ventileinrichtungen (30, 42, 23) und der aus zwei Drucksensoren bestehenden Drucksensoreinrichtung bleibt dabei unverändert. Bei einem Stellvorgang wird in der elektrischen Steuereinrichtung die Differenz zwischen dem Druck in der jeweils einen Druckmittelkammer (2 oder 5) und dem Druck in der jeweils anderen Druckmittelkammer (5 oder 2) der Stelleinrichtung (1) ermittelt. Wird ein Differenzdruckwert erkannt, der einem in einer Tabelle der elektrischen Steuereinrichtung (52) abgelegten Differenzdruckwert entspricht, wird von der elektrischen Steuereinrichtung (52) ein entsprechendes Steuersignal auf die dritte Ventileinrichtung (23) und auf die Ventileinrichtung (30 oder 42) gegeben, mittels welcher der Druckabbau in der einen Druckmittelkammer (2 oder 5) gesteuert werden soll. Die jeweils andere Druckmittelkammer wird dabei gegen die Druckmittelquelle (43, 49) abgesperrt. Eine große Differenz zwischen dem Druck in der jeweils einen Druckmittelkammer und dem Druck in der jeweils anderen Druckmittelkammer wirkt sich auf die Kraft, welche auf den Kolben (3) und somit auf das Stellglied (4) ausgeübt wird, genauso aus, wie die Druckmitteleinsteuerung in eine der Druckmittelkammern mit einem Druck, welcher steil ansteigt. Ebenso wirkt sich eine kleine Differenz zwischen den Drücken in den beiden Druckmittelkammern der Stelleinrichtung auf die Kraft, welche auf den Kolben und das Stellglied einwirken, genauso aus, wie die Druckmitteleinsteuerung in eine der Druckmittelkammern mit einem Druck, welcher weniger steil ansteigt. Die Auswirkungen auf die Stellgeschwindigkeit sind ebenso die gleichen.

Es ist gemäß der Erfindung selbstverständlich auch möglich, zwischen den der zweiten Stelleinrichtung (6) zugeordneten beiden steuerbaren Ventileinrichtungen (14, 13) und der Druckmittelquelle (43, 49) ebenfalls eine dritte Ventileinrichtung anzuordnen und in der vom Druckmittelausgang dieser dritten Ventileinrichtung zu den Druckmitteleingängen dieser beiden Ventileinrichtungen (14, 13) führenden Druckmittelleitung einen Drucksensor vorzusehen. Der Druck in den Druckmittelkammern (7, 10) der zweiten Stelleinrichtung (6) kann dann in der gleichen Art und Weise wie der Druck in den Druckmittelkammern (2, 5) der ersten Stelleinrichtung (1) nach einer in der Elektronik der elektrischen Steuereinrichtung (52) abgelegten Tabelle geregelt werden. Die steuerbaren Ventileinrichtungen der zweiten Stelleinrichtung (6) können dann auch so ausgebildet sein wie die steuerbaren Ventileinrichtungen der ersten Stelleinrichtung (1).

Ebenso können dann auch zwei Drucksensoren vorgesehen werden, wobei je ein Drucksensor je einer Druckmittelkammer (7 bzw. 10) der zweiten Stelleinrichtung (6) zugeordnet wird.

Gemäß der Erfindung kann der Druckmitteleingang der ersten Ventileinrichtung (14) und der Druckmitteleingang der zweiten Ventileinrichtung (13) der zweiten Stelleinrichtung (6) auch direkt an die Druckmittelleitung (27) angeschlossen werden, welche mit der den Druckmitteleingang (32) der ersten steuerbaren Ventileinrichtung (30) und den Druckmitteleingang (38) der zweiten steuerbaren Ventileinrichtung (42) der ersten Stelleinrichtung (1) miteinander und mit dem Druckmittelanschluß der Drucksensoreinrichtung (36) verbindenden Druckmittelleitung (29) verbunden ist. Ein solches Verknüpfen der Druckmittelleitungen der erfindungsgemäßen Einrichtung ist deshalb möglich, weil die erste Stelleinrichtung (1) und die zweite Stelleinrichtung (6) jeweils zu unterschiedlichen Zeitpunkten und nicht gleichzeitig geschaltet werden. Die auf den Kolben (8) und somit auf das Stellglied (9) der zweiten Stelleinrichtung (6) einwirkende Kraft läßt sich so auf sehr einfache Art und Weise mit Hilfe einer Steuerung der dritten Ventileinrichtung (23) modifizieren.

Die elektrische Steuereinrichtung (52) ist bei einer solchen Ausführung der Erfindung so ausgebildet und so mit den beiden steuerbaren Ventileinrichtungen (30, 42) der ersten Stelleinrichtung (1), mit den beiden steuerbaren Ventileinrichtungen (14, 13) der zweiten Stelleinrichtung (6) und mit der dritten steuerbaren Ventileinrichtung (23) sowie mit der Drucksensoreinrichtung (36) verknüpft, daß das Ansteuern wenigstens einer dieser Ventileinrichtungen (14, 13, 23) in Abhängigkeit von den Signalen der Drucksensoreinrichtung (36) bringbar ist. Je nach Schaltstellung der Ventileinrichtungen (30, 42, 14, 13, 23) ist die Drucksensoreinrichtung (36) mit dem Druck der ersten Druckmittelkammer (2) oder dem Druck der zweiten Druckmittelkammer (5) der ersten Stelleinrichtung (1) oder mit dem Druck der ersten Druckmittelkammer (7) oder dem Druck der zweiten Druckmittelkammer (10) der zweiten Stelleinrichtung (6) oder mit dem Druck der Druckmittelquelle (43, 49) beaufschlagbar.

Die von der Drucksensoreinrichtung (36) abgegebenen, den ermittelten Drücken entsprechenden elektrischen Signale werden der elektrischen Steuereinrichtung (52) zugeführt. Die elektrische Steuereinrichtung (52) weist Mittel auf, welche die Signale der Drucksensoreinrichtung (36) auswerten und Steuersignale auf wenigstens eine der steuerbaren Ventileinrichtungen (30, 42, 14, 13, 23) geben, wenn die ermittelten Ist-Druck-Werte bestimmten, in einer Tabelle abgelegten Soll-Druck-Werten entsprechen oder von diesen abweichen, je nachdem, ob als Schaltkriterium eine Differenz oder Gleichheit zwischen dem Ist-Druck-Wert und dem Soll-Druck-Wert dienen soll.

Die Steuersignale können dann zusätzlich noch in Abhängigkeit von Signalen gebracht werden, welche von den Wegsensoren (64, 65) auf die elektrische Steuereinrichtung (52) gegeben werden. Die elektrische Steuereinrichtung (52) weist Mittel auf, welche die Wegsensorsignale auswerten und Steuersignale auf wenigstens eine der steuerbaren Ventileinrichtungen (30, 42, 14, 13, 23) geben, wenn die ermittelten Ist-Weg-Werte bestimmten, in einer Tabelle abgelegten Soll-Weg-Werten entsprechen oder von diesen abweichen, je nachdem, ob als Schaltkriterium eine Differenz oder Gleichheit zwischen dem Ist-Weg-Wert und dem Soll-Weg-Wert dienen soll.

Es sind in der elektrischen Steuereinrichtung (52) weitere Mittel vorgesehen, welche erkennen, ob ein ermittelter Ist-Druck-Wert einem bestimmten Soll-Druck-Wert entspricht und zusätzlich ein ermittelter Ist-Weg-Wert einem bestimmten Soll-Weg-Wert entspricht und bei Erfüllen dieser Bedingung Steuersignale auf wenigstens eine der Ventileinrichtungen (30, 42, 14, 13, 23), vorzugsweise jedoch auf die dritte Ventileinrichtung (23), geben oder das Steuersignal bzw. die Steuersignale an der wenigstens einen Ventileinrichtung (30, 42, 14, 13,23) abfallen lassen.

Gemäß der Erfindung kann die der ersten Druckmittelkammer (2) der Stelleinrichtung (1) zugeordnete erste steuerbare Ventileinrichtung von einem als Einlaßventil dienenden steuerbaren 2/2-Wegeventil und einem als Auslaßventil dienenden 2/2-Wegeventil gebildet werden. Die der zweiten Druckmittelkammer (5) der Stelleinrichtung (1) zugeordnete zweite steuerbare Ventileinrichtung wird dann ebenso von einem als Einlaßventil dienenden steuerbaren 2/2-Wegeventil und einem als Auslaßventil dienenden steuerbaren 2/2-Wegeventil gebildet. Die Drucksensoreinrichtung (36) besteht dann aus einem mit der ersten Druckmittelkammer (2) verbundenen ersten Drucksensor und einem mit der zweiten Druckmittelkammer (5) verbundenen zweiten Drucksensor. Die beiden Drucksensoren und die vier als Elektromagnetventile ausgebildeten 2/2-Wegeventile sind elektrisch mit der elektrischen Steuereinrichtung (52) verbunden.

Die elektrische Steuereinrichtung (52) ist dann so ausgebildet und so mit den beiden Drucksensoren und den vier 2/2-Wegeventilen verknüpft, daß das Ansteuern der als Einlaßventile dienenden 2/2-Wegeventile und gegebenenfalls auch das Ansteuern der als Auslaßventile dienenden 2/2-Wegeventile in Abhängigkeit von wenigstens den Signalen der Drucksensoreinrichtung bringbar ist.

In den Patentansprüchen ist angegeben, daß das Ansteuern wenigstens einer der Ventileinrichtungen (30, 42, 23) in Abhängigkeit von wenigstens den Signalen der Drucksensoreinrichtung (36) bringbar ist. Dies bedeutet, daß bei einem Drucksteuervorgang wenigstens eine von mehreren Betätigungen wenigstens einer der Ventileinrichtungen (30 oder 42 oder 23) durch ein Signal bewirkt wird, welches abhängig ist von einem eine bestimmte Druckhöhe in der Druckmittelkammer darstellenden Signal der Drucksensoreinrichtung (36). Weitere Betätigungen derselben Ventileinrichtung oder einer anderen der Ventileinrichtungen (30 oder 42 oder 23) können für denselben Drucksteuervorgang jedoch zusätzlich noch in Abhängigkeit von anderen Signalen, z.B. in Abhängigkeit von Signalen des Wegsensors (64), gebracht werden.

Unter einem Drucksteuervorgang ist das Druckeinsteuern oder auch das Druckabbauen, welches für einen vollständigen Stellvorgang der Stelleinrichtung erforderlich ist, zu verstehen.

Als Druckmittel zum Antreiben des Kolbens der Stelleinrichtung kann ein gasförmiges oder ein flüssiges Medium dienen.

Die Stelleinrichtung kann als doppeltwirkender Arbeitszylinder oder als Drei-Stellungs-Zylinder ausgebildet sein.

## Patentansprüche

1. Einrichtung zum Steuern wenigstens einer Getriebe-Stelleinrichtung, mit folgenden Merkmalen:
a) eine erste Stelleinrichtung (1) dient als Gangzylinder und weist eine erste Druckmittelkammer (2) und eine zweite Druckmittelkammer (5) auf, die durch einen in Richtung seiner Längsachse bewegbaren Kolben (3) voneinander getrennt sind;
b) es ist eine erste steuerbare Ventileinrichtung (30) vorgesehen, über welche die erste Druckmittelkammer (2) wahlweise mit einer Druckmittelquelle (43, 49) oder mit einer Druckmittelsenke verbindbar ist;
c) es ist eine zweite steuerbare Ventileinrichtung (42) vorgesehen, über welche die zweite Druckmittelkammer (5) wahlweise mit der Druckmittelquelle (43, 49) oder mit der Druckmittelsenke verbindbar ist;
d) es ist eine elektrische Steuereinrichtung (52) zum Ansteuern der Ventileinrichtungen (30, 42) vorgesehen;
e) die erste steuerbare Ventileinrichtung (30) weist einen Druckmitteleingang (32), einen mit der ersten Druckmittelkammer (2) verbundenen Druckmittelausgang (34) und einen Druckmittelauslass (33) auf;
f) die zweite steuerbare Ventileinrichtung (42) weist einen Druckmitteleingang (38), einen mit der zweiten Druckmittelkammer (5) verbundenen Druckmittelausgang (41) und einen Druckmittelauslass (39) auf;
g) es ist eine mittels der elektrischen Steuereinrichtung (52) steuerbare dritte Ventileinrichtung (23) vorgesehen, die so mit der ersten steuerbaren Ventileinrichtung (30) und mit der zweiten steuerbaren Ventileinrichtung (42) sowie mit der Druckmittelquelle (43, 49) verbunden ist, dass der Druckmitteleingang (32) der ersten steuerbaren Ventileinrichtung (30) und der Druckmitteleingang (38) der zweiten steuerbaren Ventileinrichtung (42) wahlweise mit der Druckmittelquelle verbindbar oder gegen diese absperrbar ist;
h) es ist eine Drucksensoreinrichtung (36) vorgesehen, mittels welcher der Druck in der ersten Druckmittelkammer (2) und der Druck in der zweiten Druckmittelkammer (5) messbar ist;
i) die Drucksensoreinrichtung (36) ist mit der elektrischen Steuereinrichtung (52) elektrisch verbunden;
k) die elektrische Steuereinrichtung (52) ist so ausgebildet und so mit der Drucksensoreinrichtung (36) und den steuerbaren Ventileinrichtungen (30, 42, 23) verknüpft, dass das Ansteuern wenigstens einer der Ventileinrichtungen (30, 42, 23) in Abhängigkeit von wenigstens den Signalen der Drucksensoreinrichtung (36) bringbar ist;
l) die dritte steuerbare Ventileinrichtung (23) weist einen mit der Druckmittelquelle (43, 49) verbundenen Druckmitteleingang (24) und einen Druckmittelausgang (25) auf;
m) der Druckmitteleingang (32) der ersten steuerbaren Ventileinrichtung (30) und der Druckmitteleingang (38) der zweiten steuerbaren Ventileinrichtung (42) sind über eine Druckmittelleitung (29, 27) miteinander und mit dem Druckmittelausgang (25) der dritten steuerbaren Ventileinrichtung (23) verbunden;
n) die Drucksensoreinrichtung (36) weist einen Druckmittelanschluss auf, welcher mit der Druckmittelleitung (29, 27) verbunden ist, welche den Druckmitteleingang (32) der ersten steuerbaren Ventileinrichtung (30) und den Druckmitteleingang (38) der zweiten steuerbaren Ventileinrichtung (42) miteinander und mit dem Druckmittelausgang (25) der dritten steuerbaren Ventileinrichtung (23) verbindet;
o) mittels der dritten Ventileinrichtung (23) sind der Druckmitteleingang (32) der ersten steuerbaren Ventileinrichtung (30), der Druckmitteleingang (38) der zweiten steuerbaren Ventileineinrichtung (42) und der Druckmittelanschluss der Drucksensoreinrichtung (36) wahlweise mit der Druckmittelquelle (43, 49) verbindbar oder gegen diese absperrbar;
p) die Drucksensoreinrichtung (36) besteht aus einem Drucksensor, der je nach Schaltstellung der drei steuerbaren Ventileinrichtungen (30, 42, 23) mit dem Druck der ersten Druckmittelkammer (2) oder mit dem Druck der zweiten Druckmittelkammer (5) der ersten Stelleinrichtung (1) oder mit dem Druck der Druckmittelquelle (43, 49) i.e. Versorgungsdruck, beaufschlagbar ist und dem Druck in der ersten Druckmittelkammer (2) oder dem Druck in der zweiten Druckmittelkammer (5) oder dem Druck der Druckmittelquelle (43, 49) i.e. Versorgungsdruck, entsprechende elektrische Signale erzeugt;
q) es ist eine weitere, zweite, als Gassenzylinder dienende Stelleinrichtung (6) vorgesehen, die eine erste Druckmittelkammer (7) und eine zweite Druckmittelkammer (10) aufweist, die durch einen in Richtung seiner Längsachse bewegbaren Kolben (8) voneinander getrennt sind;
r) es ist eine der zweiten Stelleinrichtung (6) zugeordnete weitere erste steuerbare Ventileinrichtung (14) vorgesehen, die einen Druckmitteleingang, einen mit der ersten Druckmittelkammer (7) der zweiten Stelleinrichtung (6) verbundenen Druckmittelausgang und einen Druckmittelauslass aufweist;
s) es ist eine der zweiten Stelleinrichtung (6) zugeordnete weitere zweite steuerbare Ventileinrichtung (13) vorgesehen, die einen Druckmitteleingang, einen mit der zweiten Druckmittelkammer (10) der zweiten Stelleinrichtung (6) verbundenen Druckmittelausgang und einen Druckmittelauslass aufweist;
t) der Druckmitteleingang der weiteren ersten steuerbaren Ventileinrichtung (14) der zweiten Stelleinrichtung (6) und der Druckmitteleingang der weiteren zweiten steuerbaren Ventileinrichtung (13) der zweiten Stelleinrichtung (6) sind mit der Druckmittelleitung (18) verbunden, welche den Druckmitteleingang (24) der dritten steuerbaren Ventileinrichtung (23) mit der Druckmittelquelle (43, 49) verbindet.

2. Einrichtung nach Anspruch 1, **gekennzeichnet durch** die folgenden Merkmale:
a) die dritte steuerbare Ventileinrichtung wird von einem ersten steuerbaren Absperrventil und einem zweiten steuerbaren Absperrventil gebildet;
b) das erste steuerbare Absperrventil ist zwischen dem Druckmitteleingang (32) der ersten steuerbaren Ventileinrichtung (30) und der Druckmittelquelle (43, 49) angeordnet und das zweite steuerbare Absperrventil ist zwischen dem Druckmitteleingang (38) der zweiten steuerbaren Ventileinrichtung (42) und der Druckmittelquelle (43, 49) angeordnet.

3. Einrichtung nach wenigstens einem der vorhergehenden Ansprüche, **dadurch gekennzeichnet, dass** die beiden ersten steuerbaren Ventileinrichtungen (14, 30) und die beiden zweiten steuerbaren Ventileinrichtungen (13, 42) als 3/2-Wege-Elektromagnetventile ausgebildet sind.

4. Einrichtung nach wenigstens einem der vorhergehenden Ansprüche, **dadurch gekennzeichnet, dass** die dritte steuerbare Ventileinrichtung (23) als 2/2-Wege-Elektromagnetventil ausgebildet ist.

5. Einrichtung nach Anspruch 2, **dadurch gekennzeichnet, dass** das erste steuerbare Absperrventil und das zweite steuerbare Absperrventil als 2/2-Wege-Elektromagnetventile ausgebildet sind.

6. Einrichtung nach wenigstens einem der vorhergehenden Ansprüche, **dadurch gekennzeichnet, dass** die elektrische Steuereinrichtung (52) so ausgebildet ist, dass beim Druckeinsteuern in eine Druckmittelkammer (2, 5) der ersten Stelleinrichtung (1) wenigstens eine der Ventileinrichtungen (30, 42) der ersten Stelleinrichtung (1) oder die dritte Ventileinrichtung (23) so angesteuert wird, dass der Druck in der Druckmittelkammer (2, 5) nach einer Kennlinie ansteigt, die erst relativ steil, dann weniger steil ansteigt oder flach ist und daran anschließend wieder relativ steil ansteigt.

7. Einrichtung nach wenigstens einem der vorhergehenden Ansprüche, **gekennzeichnet durch** die folgenden Merkmale:
a) die elektrische Steuereinrichtung (52) ist so ausgebildet, dass vor Beginn oder zu Beginn eines Stellvorganges die Ventileinrichtungen (30, 42) der ersten Stelleinrichtung (1) und die dritte Ventileinrichtung (23) sich in einer Schaltstellung befinden, in welcher beide Druckmittelkammern (2, 5) der ersten Stelleinrichtung (1) mit der Druckmittelquelle (43, 49) verbunden sind und dass zum Betätigen der ersten Stelleinrichtung (1) wenigstens eine der Ventileinrichtungen (30, 42) der ersten Stelleinrichtung (1) von der elektrischen Steuereinrichtung (52) so angesteuert wird, dass der Druck in der einen Druckmittelkammer (2, 5) abgebaut wird;
b) die elektrische Steuereinrichtung (52) ist so ausgebildet, dass sie ein in der Weise modifiziertes Steuersignal zum Ansteuern der den Druckabbau bewirkenden Ventileinrichtung bzw. Ventileinrichtungen (30, 42) der ersten Stelleinrichtung (1) erzeugt, dass die Druckdifferenz zwischen den Drücken in den beiden Druckmittelkammern (2, 5) sich erst schnell, dann verlangsamt und daran anschließend wieder schnell vergrößert.

8. Einrichtung nach wenigstens einem der vorhergehenden Ansprüche, **dadurch gekennzeichnet, dass** die elektrische Steuereinrichtung (52) so ausgebildet ist, dass sie zum Steuern wenigstens einer der steuerbaren Ventileinrichtungen (23, 30, 42) ein pulsbreitenmoduliertes Signal mit variierendem Tastverhältnis erzeugt.

9. Einrichtung nach wenigstens einem der vorhergehenden Ansprüche, **gekennzeichnet durch** die folgenden Merkmale:
a) dem Kolben (3) oder einem mit dem Kolben (3) verbundenen Steilglied (4) der wenigstens einen Stelleinrichtung (1) ist ein Wegsensor (64) zum Aufnehmen des vom Kolben (3) zurückgelegten Weges zugeordnet, wobei der Wegsensor (64) mit der elektrischen Steuereinrichtung (52) elektrisch verbunden ist;
b) die elektrische Steuereinrichtung (52) ist so ausgebildet und so mit dem Wegsensor (64) verknüpft, dass das Ansteuern wenigstens einer der steuerbaren Ventileinrichtungen (30, 42, 23) zusätzlich in Abhängigkeit von den Signalen des Wegsensors (64) bringbar ist.

10. Einrichtung nach wenigstens einem der vorhergehenden Ansprüche, **dadurch gekennzeichnet, dass** in der vom Druckmittelausgang (25) der dritten steuerbaren Ventileinrichtung (23) zum Druckmitteleingang (32) der ersten steuerbaren Ventileinrichtung (30) der ersten Stelleinrichtung (1) und zum Druckmitteleingang (38) der zweiten steuerbaren Ventileinrichtung (42) der ersten Stelleinrichtung (1) sowie zu dem Druckmittelanschluss der Drucksensoreinrichtung (36) hinführenden Druckmittelleitung (27) eine Drossel (26) angeordnet ist.

11. Einrichtung nach wenigstens einem der vorhergehenden Ansprüche, **gekennzeichnet durch** die folgenden Merkmale:
a) die Druckmittelquelle (43, 49) weist eine Druckerzeugungseinrichtung (49) auf;
b) die elektrische Steuereinrichtung (52) ist so ausgebildet und so mit der Druckerzeugungseinrichtung (49) und mit der Drucksensoreinrichtung (36) bzw. mit dem Drucksensor (47) verknüpft, dass die Druckerzeugungseinrichtung wenigstens in den Steuerphasen, in denen die dritte Ventileinrichtung (23) sich in ihrer Offenstellung befindet, in Abhängigkeit von den Signalen der Drucksensoreinrichtung (36) bzw. des Drucksensors (47) eingeschaltet wird, wenn ein vorbestimmter unterer Druckwert des Versorgungsdruckes erreicht oder unterschritten wird und ausgeschaltet wird, wenn ein vorbestimmter oberer Druckwert des Versorgungsdruckes erreicht oder überschritten wird.

12. Einrichtung nach Anspruch 11, **gekennzeichnet durch** die folgenden Merkmale:
a) zum Antreiben der Druckerzeugungseinrichtung (49) dient ein Motor (48);
b) der Motor (48) ist mit der elektrischen Steuereinrichtung (52) elektrisch verbunden;
c) die elektrische Steuereinrichtung (52) ist so ausgebildet und so mit dem Motor (48) und mit der Drucksensoreinrichtung (36) bzw. mit dem Drucksensor (47) verknüpft, dass der Motor (48) wenigstens in den Steuerphasen, in denen die dritte Ventileinrichtung (23) sich in ihrer Offenstellung befindet, in Abhängigkeit von den Signalen der Drucksensoreinrichtung (36) bzw. des Drucksensors (47) eingeschaltet wird, wenn ein vorbestimmter unterer Druckwert des Versorgungsdruckes erreicht oder unterschritten wird und ausgeschaltet wird, wenn ein vorbestimmter oberer Druckwert des Versorgungsdruckes erreicht oder überschritten wird.

## Claims

1. Device for controlling a gear unit actuator having the following features:
a) a first actuator (1) is used as a gear-change cylinder and comprises a first pressure medium chamber (2) and a second pressure medium chamber (5), which are separated from one another by a piston (3) movable in the direction it its longitudinal axis;
b) a first controllable valve device (30) is provided, via which the first pressure medium chamber (2) is arranged to be connected either to a pressure medium source (43, 49) or to a pressure medium sink;
c) a second controllable valve device (42) is provided, via which the second pressure medium chamber (5) is arranged to be connected either to the pressure medium source (43, 49) or to the pressure medium sink;
d) an electrical control device (52) for activating the valve devices (30, 42) is provided;
e) the first controllable valve device (30) has a pressure medium input (32), a pressure medium output (34) connected to the first pressure medium chamber (2) and a pressure medium outlet (33);
f) the second controllable valve device (42) has a pressure medium input (38), a pressure medium output (41) connected to the second pressure medium chamber (5) and a pressure medium outlet (39);
g) a third valve device (23) controllable by means of the electrical control device (52) is provided, which is connected to the first controllable valve device (30) and with the second controllable valve device (42) as well as with the pressure medium source (43, 39) in such a way that the pressure medium input (32) of the first controllable valve device (30) and the pressure medium input (38) of the second controllable valve device (42) can either be connected to the pressure medium source or can be blocked with respect thereto;
h) a pressure sensor device (36) is provided, by means of which the pressure in the first pressure medium chamber (2) and the pressure in the second pressure medium chamber (5) is measurable;
i) the pressure sensor device (36) is electrically connected to the electrical control device (52);
k) the electrical control device (52) is constructed and linked with the pressure sensor device (36) and with the controllable valve devices (30, 42, 23) in such a way that activation of at least one of the valve devices (30, 42, 23) can be effected in dependence on at least the signals of the pressure sensor device (36).
l) the third controllable valve device (23) has a pressure medium input (24) connected to the pressure medium source (43, 49) and a pressure medium output (25);
m) the pressure medium input (32) of the first controllable valve device (30) and the pressure medium input (38) of the second controllable valve device (42) are connected by way of a pressure medium line (29, 27) with one another and with the pressure medium output (25) of the third controllable valve device (23);
n) the pressure sensor device (36) has a pressure medium connection which is connected to the pressure medium line (29, 27) that connects the pressure medium input (32) of the first controllable valve device (30) and the pressure medium input (38) of the second controllable valve device (42) with one another and with the pressure medium output (25) of the third controllable valve device (23);
o) by means of the third valve device (23), the pressure medium input (32) of the first controllable valve device (30), the pressure medium input (38) of the second controllable valve device (42) and the pressure medium connection of the pressure sensor device (36) can either be connected to the pressure medium source (43, 49) or can be blocked with respect thereto;
p) the pressure sensor device (36) consists of a pressure sensor, which, depending on the position of the three controllable valve devices (30, 42, 23), can be acted on by the pressure of the first pressure medium chamber (2) or by the pressure of the second pressure medium chamber (5) of the first actuator (1) or by the pressure of the pressure medium source (43, 49), i.e. supply pressure, and generates electrical signals corresponding to the pressure in the first pressure medium chamber (2) or the pressure in the second pressure medium chamber (5) or the pressure of the pressure medium source (43, 49), i.e. supply pressure;
q) a further, second actuator (6) is provided and used as a gutter cylinder, which comprises a first pressure medium chamber (7) and a second pressure medium chamber (10) which are separated from one another by a piston (8) movable in the direction of its longitudinal axis;
r) a further first controllable valve device (14) associated with the second actuator (6) is provided, which has a pressure medium input, a pressure medium output connected to the first pressure medium chamber (7) of the second actuator (6) and a pressure medium outlet;
s) a further second controllable valve device (13) associated with the second actuator (6) is provided, which has a pressure medium input, a pressure medium output connected to the second pressure medium chamber (10) of the second actuator (6) and a pressure medium outlet;
t) the pressure medium input of the further first controllable valve device (14) of the second actuator (6) and the pressure medium input of the further second controllable valve device (13) of the second actuator (6) are connected to the pressure medium line (18) that connects the pressure medium input (24) of the third controllable valve device (23) with the pressure medium source (43, 49).

2. Device according to claim 1, **characterised by** the following features:
a) the third controllable valve device is formed by a first controllable shut-off valve and a second controllable shut-off valve;
b) the first controllable shut-off valve is arranged between the pressure medium input (32) of the first controllable valve device (30) and the pressure medium source (43, 49) and the second shut-off valve is arranged between the pressure medium input (38) of the second controllable valve device (42) and the pressure medium source (43, 49).

3. Device according to at least one of the preceding claims, **characterised in that** both first controllable valve devices (14, 30) and both second controllable valve devices (13, 42) are in the form of 3/2-way solenoid valves.

4. Device according to at least one of the preceding claims, **characterised in that** the third controllable valve device (23) is in the form of a 2/2-way solenoid valve.

5. Device according to claim 2, **characterised in that** the first controllable shut-off valve and the second controllable shut-off valve are in the form of 212-way solenoid valves.

6. Device according to at least one of the preceding claims, **characterised in that** the electrical control device (52) is constructed so that as pressure is admitted into a pressure medium chamber (2, 5) of the first actuator (1), at least one of the valve devices (30, 42) of the first actuator (1) or the third valve device (23) is activated in such a way that the pressure in the pressure medium chamber (2, 5) rises in accordance with a characteristic curve that rises at first relatively steep, then rises less steeply or is level and thereafter again rises relatively steeply.

7. Device according to at least one of the preceding claims, **characterised by** the following features:
a) the electrical control device (52) is constructed so that before the start or at the start of an adjustment procedure, the valve devices (30, 42) of the first actuator (1) and the third valve device (23) are in a position in which both pressure medium chambers (2, 5) of the first actuator (1) are connected to the pressure medium source (43, 39) and in that to operate the first actuator (1) at least one of the valve devices (30, 42) of the first actuator (1) is actuated by the electrical control device (52) in such a way that the pressure in the one pressure medium chamber (2, 5) is reduced;
b) the electrical control device (52) is constructed so that it generates a control signal for activating the valve device or valve devices (30, 42) of the first actuator (1) effecting the pressure reduction, said signal being modified so that the pressure difference between the pressures in the two pressure medium chambers (2, 5) increases at first rapidly, then decelerates and thereafter increases rapidly again.

8. Device according to at least one of the preceding claims, **characterised in that** the electrical control device (52) is constructed so that it generates a pulse-width modulated signal of varying duty factor for controlling at least one of the controllable valve devices (23, 30, 42).

9. Device according to at least one of the preceding claims, **characterised by** the following features:
a) the piston (3) or a control element (4) of the at least one actuator (1) connected to the piston (3) has associated with it a displacement sensor (64) for detecting the path covered by the piston (3), the displacement sensor (64) being electrically connected to the electrical control device (52);
b) the electrical control device (52) is constructed and linked with the displacement sensor (64) in such a way the activation of one of the controllable valve devices (30, 42, 23) can be effected additionally in dependence on the signals of the displacement sensor (64).

10. Device according to at least one of the preceding claims, **characterised in that** a throttle (26) is arranged in the pressure medium line (27) leading from the pressure medium output (25) of the third controllable valve device (23) to the pressure medium input (32) of the first controllable valve device (30) of the first actuator (1) and to the pressure medium input (38) of the second controllable valve device (42) of the first actuator (1) and to the pressure medium connection of the pressure sensor device (36).

11. Device according to at least one of the preceding claims, **characterised by** the following features:
a) the pressure medium source (43, 49) comprises a pressure-generating device (49);
b) the electrical control device (52) is constructed and linked with the pressure-generating device (49) and with the pressure sensor device (36) or with the pressure sensor (47) so that the pressure-generating device, in dependence on the signals of the pressure sensor device (36) or the pressure sensor (47), at least in the control phases in which the third valve device (23) is located in its open position, is switched on when a predetermined lower pressure value of the supply pressure is reached or fallen below and is switched off when a predetermined upper pressure value of the supply pressure is reached or exceeded.

12. Device according to claim 11, **characterised by** the following features:
a) a motor (48) is used to drive the pressure-generating device (49);
b) the motor (48) is electrically connected to the electrical control device (52);
c) the electrical control device (52) is constructed and linked with the motor (48) and with the pressure sensor device (36) or the pressure sensor (47) so that the motor (48), in dependence on the signals of the pressure sensor device (36) or the pressure sensor (47), at least in the control phases in which the third valve device (23) is located in its open position, is switched on when a predetermined lower pressure value of the supply pressure is reached or fallen below, and is switched off when a predetermined upper pressure value of the supply pressure is reached or exceeded.

## Revendications

1. Dispositif de commande pour actionneur de transmission, présentant les caractéristiques suivantes:
a) un premier actionneur (1) sert de vérin de changement de vitesse comprend une première chambre de pression (2) et une seconde chambre de pression (5) qui sont séparées l'une de l'autre par un piston (3) mobile dans le sens de son axe longitudinal;
b) il est prévu un premier système de soupape commandable (30) par l'intermédiaire duquel la première chambre de pression (2) peut être reliée soit à une source de pression (43, 49) soit à une réserve de pression;
c) il est prévu un deuxième système de soupape commandable (42) par l'intermédiaire duquel la seconde chambre de pression (5) peut être reliée soit à la source de pression (43, 49) soit à la réserve de pression;
d) il est prévu un dispositif de contrôle électrique (52) destiné à contrôler les systèmes de soupape (30, 42);
e) le premier système de soupape commandable (30) comprend un orifice d'entrée de pression (32), un orifice de refoulement de pression (34) relié à la première chambre de pression (2) et un orifice d'échappement de pression (33);
f) le deuxième système de soupape (42) commandable comprend un orifice d'entrée de pression (38), un orifice de refoulement de pression (41) relié à la seconde chambre de pression (5) et un orifice d'échappement de pression (39);
g) il est prévu un troisième système de soupape (23) commandable à l'aide du dispositif de contrôle électrique (52), lequel système est relié au premier système de soupape (30) commandable et au deuxième système de soupape (42) commandable ainsi qu'à la source de pression (43, 49) de telle sorte que l'orifice d'entrée de pression (32) du premier système de soupape (30) commandable et l'orifice d'entrée de pression (38) du deuxième système de soupape (42) commandable puissent être soit reliés à la source de pression soit fermés à celle-ci;
h) il est prévu un dispositif de capteur de pression (36) à l'aide duquel la pression présente dans la première chambre de pression (2) et la pression présente dans la seconde chambre de pression (5) peuvent être mesurées;
i) le dispositif de capteur de pression (36) est relié électriquement au dispositif de contrôle électrique (52);
k) le dispositif de contrôle électrique (52) est réalisé et relié au dispositif de capteur de pression (36) et aux systèmes de soupape commandables (30, 42, 23) de telle sorte que le contrôle d'au moins un des systèmes de soupape (30, 42, 23) puisse être produit en fonction d'au moins les signaux du dispositif de capteur de pression (36);
l) le troisième système de soupape commandable (23) comprend un orifice d'entrée de pression (24) relié à la source de pression (43, 49) et un orifice de refoulement de pression (25);
m) l'orifice d'entrée de pression (32) du premier système de soupape commandable (30) et l'orifice d'entrée de pression (38) du deuxième système de soupape commandable (42) sont reliés l'un à l'autre par l'intermédiaire d'une conduite de pression (29, 27) et à l'orifice de refoulement de pression (25) du troisième système de soupape commandable (23);
n) le dispositif de capteur de pression (36) comprend un raccord de pression, lequel est relié à la conduite de pression (29, 27), laquelle relie l'orifice d'entrée de pression (32) du premier système de soupape commandable (30) et l'orifice d'entrée de pression (38) du deuxième système de soupape commandable (42) l'un à l'autre et à l'orifice de refoulement de pression (25) du troisième système de soupape commandable (23);
o) à l'aide du troisième système de soupape (23), l'orifice d'entrée de pression (32) du premier système de soupape commandable (30), l'orifice d'entrée de pression (38) du deuxième système de soupape commandable (42) et le raccord de pression du dispositif de capteur de pression (36) peuvent être soit reliés à la source de pression (43, 49) soit être fermés à celleci;
p) le dispositif de capteur de pression (36) est constitué d'un capteur de pression qui peut être alimenté respectivement en fonction de la position de commutation des trois systèmes de soupape commandables (30, 42, 23) par la pression de la première chambre de pression (2) ou par la pression de la seconde chambre de pression (5) de le premier actionneur (1) ou par la pression de la source de pression (43, 49), c'est-à-dire pression d'alimentation, et qui crée des signaux électriques correspondant à la pression présente dans la première chambre de pression (2) ou à la pression présente dans la seconde chambre de pression (5) ou à la pression de la source de pression (43, 49), c'est-à-dire pression d'alimentation;
q) il est prévu un autre, deuxième actionneur (6) sert de vérin de changement de couloir qui comprend une première chambre de pression (7) et une seconde chambre de pression (10), lesquelles sont séparées l'une de l'autre par un piston (8) mobile dans le sens de son axe longitudinal;
r) il est prévu un autre premier système de soupape commandable (14) qui est associé avec le deuxième actionneur (6) et comprend un orifice d'entrée de pression, un orifice de refoulement de pression relié à la première chambre de pression (7) du second actionneur (6) et un orifice d'échappement de pression;
s) il est prévu un autre deuxième système de soupape commandable (13) qui est associé avec le deuxième actionneur (6) et comprend un orifice d'entrée de pression, un orifice de refoulement de pression relié à la seconde chambre de pression (10) du second actionneur (6) et un orifice d'échappement de pression;
t) l'orifice d'entrée de pression de l'autre premier système de soupape commandable (14) du second actionneur (6) et l'orifice d'entrée de pression de l'autre deuxième système de soupape commandable (13) du second actionneur (6) sont reliés à la conduite de pression (18), laquelle relie l'orifice d'entrée de pression (24) du troisième système de soupape commandable (23) à la source de pression (43, 49).

2. Dispositif selon la revendication 1, **caractérisé par** les caractéristiques suivantes:
a) le troisième système de soupape commandable est formé par une première soupape d'arrêt commandable et une seconde soupape d'arrêt commandable;
b) la première soupape d'arrêt commandable est disposée entre l'orifice d'entrée de pression (32) du premier système de soupape commandable (30) et la source de pression (43, 49) et la seconde soupape d'arrêt commandable est disposée entre l'orifice d'entrée de pression (38) du deuxième système de soupape commandable (42) et la source de pression (43, 49).

3. Dispositif selon au moins une des revendications précédentes, **caractérisé en ce que** les deux premiers systèmes de soupape commandable (14, 30) et les deux deuxièmes systèmes de soupape commandable (13, 42) sont réalisés sous forme de soupapes électromagnétiques 3/2.

4. Dispositif selon au moins une des revendications précédentes, **caractérisé en ce que** le troisième système de soupape commandable (23) est réalisé sous forme de soupape électromagnétique 2/2.

5. Dispositif selon la revendication 2, **caractérisé en ce que** la première soupape d'arrêt commandable et la seconde soupape d'arrêt commandable sont réalisées sous forme de soupapes électromagnétiques 2/2.

6. Dispositif selon au moins une des revendications précédentes, **caractérisé en ce que** le dispositif de contrôle électronique (52) est réalisé de telle sorte que lors de l'introduction de pression dans une chambre de pression (2, 5) de le premier actionneur (1), au moins un des systèmes de soupape (30, 42) de le premier actionneur (1) ou le troisième système de soupape (23) soit contrôlé de telle sorte que la pression dans la chambre de pression (2, 5) augmente selon une courbe caractéristique qui augmente tout d'abord de façon relativement raide, puis augmente de façon moins raide ou de façon plane, et augmente ensuite à nouveau de façon relativement raide.

7. Dispositif selon au moins une des revendications précédentes, **caractérisé par** les caractéristiques suivantes:
a) le dispositif de contrôle électronique (52) est réalisé de telle sorte qu'avant le début ou au début d'un processus de réglage, les systèmes de soupape (30, 42) de le premier actionneur (1) et le troisième système de soupape (23) se trouvent dans une position de commutation dans laquelle les deux chambres de pression (2, 5) de le premier actionneur (1) sont reliées à la source de pression (43, 49) et en ce que pour l'actionnement de le premier actionneur (1), au moins un des systèmes de soupape (30, 42) de le premier actionneur (1) est contrôlé par le dispositif de contrôle électrique (52) de telle sorte que la pression présente dans une des chambres de pression (2, 5) soit réduite;
b) le dispositif de contrôle électrique (52) est réalisé de telle sorte qu'il crée un signal de contrôle modifié permettant de contrôler le système de soupape ou les systèmes de soupape (30, 42) de le premier actionneur (1) réalisant la réduction de la pression, de telle sorte que la différence de pression entre les pressions présentes dans les deux chambres de pression (2, 5) augmente tout d'abord rapidement, puis ralentisse et augmente ensuite à nouveau rapidement.

8. Dispositif selon au moins une des revendications précédentes, **caractérisé en ce que** le dispositif de contrôle électrique (52) est réalisé de telle sorte qu'il crée, afin de contrôler au moins un des systèmes de soupape commandables (23, 30, 42) un signal à modulations d'impulsions en largeur présentant un taux d'impulsions variable.

9. Dispositif selon au moins une des revendications précédentes **caractérisé par** les caractéristiques suivantes:
a) au piston (3) ou à un organe final (4) de l'au moins un actionneur (1) relié au piston (3) est associé un capteur de course (64) permettant d'enregistrer la course parcourue par le piston (3), le capteur de course (64) étant relié électriquement au dispositif de contrôle électrique (52);
b) le dispositif de contrôle électrique (52) est réalisé et relié au capteur de course (64) de telle sorte que le contrôle d'au moins un des systèmes de soupape commandables (30, 42, 23) puisse être produit en outre en fonction des signaux du capteur de course (64).

10. Dispositif selon au moins une des revendications précédentes, **caractérisé en ce qu'**un étrangleur (26) est disposé dans la conduite de pression (27) provenant de l'orifice de refoulement de pression (25) du troisième système de soupape commandable (23) et aboutissant à l'orifice d'entrée de pression (32) du premier système de soupape commandable (30) de le premier actionneur (1) et à l'orifice d'entrée de pression (38) du deuxième système de soupape commandable (42) de le premier actionneur (1) ainsi qu'au raccord de pression du dispositif de capteur de pression (36).

11. Dispositif selon au moins une des revendications précédentes, **caractérisé par** les revendications précédentes:
a) la source de pression (43, 49) comprend un dispositif de génération de pression (49);
b) le dispositif de contrôle électrique (52) est réalisé et relié au dispositif de génération de pression (49) et au dispositif de capteur de pression (36) ou au capteur de pression (47) de telle sorte que le dispositif de génération de pression soit connecté, dans les phases de commande dans lesquelles le troisième système de soupape (23) se trouve dans sa position ouverte, en fonction des signaux du dispositif de capteur de pression (36) ou du capteur de pression (47), lorsqu'une valeur de pression inférieure prédéterminée de la pression d'alimentation est atteinte ou n'est pas atteinte, et soit déconnecté lorsqu'une valeur de pression supérieure prédéterminée de la pression d'alimentation est atteinte ou dépassée.

12. Dispositif selon la revendication 11, **caractérisé par** les caractéristiques suivantes:
a) un moteur (48) sert à entraîner le dispositif de génération de pression (49);
b) le moteur (48) est relié électriquement au dispositif de contrôle électrique (52);
c) le dispositif de contrôle électrique (52) est réalisé et relié au moteur (48) et au dispositif de capteur de pression (36) ou au capteur de pression (47) de telle sorte que le moteur (48) soit connecté, dans les phases de commande dans lesquelles le troisième système de soupape (23) se trouve dans sa position ouverte, en fonction des signaux du dispositif de capteur de pression (36) ou du capteur de pression (47), lorsqu'une valeur de pression inférieure prédéterminée de la pression d'alimentation est atteinte ou n'est pas atteinte, et soit déconnecté lorsqu'une valeur de pression supérieure prédéterminée de la pression d'alimentation est atteinte ou dépassée.
